# EUROPÄISCHE PATENTSCHRIFT

(11) **EP 4 304 832 B1**
(45) Veröffentlichungstag und Bekanntmachung des Hinweises auf die Patenterteilung: **06.08.2025**
(21) Anmeldenummer: 21839344.5
(22) Anmeldetag: 08.12.2021
(51) Int. Cl.: B29C 53/80, B29C 70/32

(54) **WICKELKOPF FÜR MINDESTENS ZWEI FASERSTRÄNGE UND WICKELVERFAHREN ZUR FERTIGUNG VON FASERVERSTÄRKTEN BAUTEILEN**
WINDING HEAD FOR AT LEAST TWO FIBER STRANDS, AND WINDING METHOD FOR PRODUCING FIBER-REINFORCED COMPONENTS
TÊTE D'ENROULEMENT POUR AU MOINS DEUX BRINS DE FIBRE ET PROCÉDÉ D'ENROULEMENT POUR LA FABRICATION DE COMPOSANTS RENFORCÉS PAR DES FIBRES

(30) Priorität: 12.03.2021 DE 102021001342
(43) Veröffentlichungstag der Anmeldung: 17.01.2024
(73) Patentinhaber: Mercedes-Benz Group AG, 70372 Stuttgart (DE)
(72) Erfinder: MINSCH, Niklas, 72669 Unterensingen (DE); ZANKER, Tim, 71154 Nufringen (DE); GRAUPNER, Peter, 74199 Untergruppenbach (DE)
(74) Vertreter: Novagraaf Group
(86) Internationale Anmeldenummer: PCT/EP2021/084755
(87) Internationale Veröffentlichungsnummer: WO 2022/189019

(56) Entgegenhaltungen:
- US-A- 3 708 132
- US-A- 4 145 740
- US-A- 4 610 402
- US-A1- 2003 186 038

## Beschreibung

Die Erfindung betrifft einen Wickelkopf zur Fertigung von faserverstärkten Bauteilen durch Umwicklung eines Wickelträgers mittels eines harzgetränkten Faserstranges, wobei der Wickelkopf eine Vorratsspule für den Faserstrang und eine Imprägniereinheit umfasst, durch welche der Faserstrang für die Imprägnierung mit flüssigem Harz führbar ist. Die Erfindung betrifft ferner ein Wickelverfahren zur Fertigung von faserverstärkten Bauteilen mittels eines derartigen Wickelkopfes

Aus der DE 10 2017 005 754 A1 ist eine Wickelanlage bekannt, bei der ein Roboterarm mit einem Wickelkopf von einer 8-eckigen Halterung zur Aufnahme von acht Wickelträgern umgeben ist. Die Wickelträger werden nacheinander bewickelt, wobei sich der Roboterarm nach Fertigstellung einer Bewicklung von einem zum nächsten Wickelträger weiterdreht.

Aus der EP 0 491 354 A1 ist eine Wickelanlage zur Fertigung von faserverstärkten Bauteilen mit einem Tape-Lege-Kopf bekannt, bei dem ein Band mit einer Walze auf einen Kern gedrückt wird und anschließend direkt an Ort und Stelle ausgehärtet wird, um das Textil zu fixieren, damit es nicht nachrutschen kann und in Ort und Lage bleibt.

Aus der US 2003/0 186 038 A1 ist ferner eine Wickelanlage zur Fertigung von faserverstärkten Bauteilen mit einem Wickelkopf bekannt, bei dem vier Faserstränge aus vier Vorrratsspulen zu einem Gesamtfaserstrang zusammengeführt und mit Harz versetzt werden.

Es ist üblich, den Wickelvorgang mit einem Faserstrang durchführen, der vorzugsweise aus einem Kohlefaserfilament besteht.

Aufgabe der Erfindung ist es, eine Wickelvorrichtung bzw. einen Wickelkopf sowie ein Wickelverfahren bereitzustellen, durch welche eine flexiblere Erzeugung von faserverstärkten Bauteilen möglich ist.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe wird gemäß Anspruch 1 dadurch gelöst, dass der Wickelkopf mindestens zwei Vorratsspulen zur Aufnahme von zwei Fasersträngen umfasst, und jeder Vorratsspule eine erste Umlenkrolle zugeordnet ist, und beabstandet hinter den ersten Umlenkrollen eine Bündelungsrolle angeordnet ist, an der die mindestens zwei Faserstränge vor der Imprägniereinheit in einen Gesamtfaserstrang zusammenführbar sind und beabstandet hinter der Bündelungsrolle eine Aufspreizrolle zur Ausbildung von zwei Faseraufspreizstrecken angeordnet ist.

Hierdurch können Bauteile erzeugt werden, die gegenüber herkömmlichen Wickelverfahren in ihren Eigenschaften variabler gestaltet werden können. So ist es möglich, Faserstränge mit unterschiedlichen Eigenschaften zu kombinieren, insbesondere Kohlefaser- und Aramidfaserstränge. Letztere haben eine gegenüber Kohlefasern verbesserte Schlagfestigkeit, so dass auf diese Weise gefertigte Bauteile in dieser Hinsicht widerstandsfähiger sind. Oder es können Kohle- oder Aramidfasern mit Aktuatorgarnen und/oder Sensorgarnen kombiniert werden. Aktuatoren könnten Piezoelemente oder Formgedächtnislegierungen sein. Als Sensorfasern können elektrische Leiter oder Halbleiter mit einer äußeren Isolierschicht verwendet werden, deren Enden an ein Messgerät angeschlossen werden. Die Anordnung einer Aufspreizrolle hinter der Bündelungsrolle dient der Ausbildung von zwei Faseraufspreizstrecken. Hierdurch wird eine längere Aufspreizstrecke für die Faserstränge bereitgestellt, in dem die Breite des Faserstranges etwa verdoppelt werden kann. Dadurch werden die Changierbewegungen der Faserstränge auf den jeweiligen Vorratsspulen ausgeglichen.

Es ist auch möglich, zwei oder mehr Faserstränge des gleichen Materials zu kombinieren, um einen Faserstrang mit größerem Querschnitt zu verwenden und damit den Wickelvorgang zu verkürzen.

Gemäß einer vorteilhaften Weiterbildung weist die Aufspreizrolle eine Umlenkung von mehr als 150° auf. Dadurch werden die Changierbewegungen der Faserstränge auf den jeweiligen Vorratsspulen ausgeglichen.

Gemäß einer vorteilhaften Weiterbildung liegen an der Bündelungsrolle und/oder der Aufspreizrolle jeweils Reinigungsbürsten zur Entfernung von Faserstrangresten an. Die aus tausenden von Faserfilamenten bestehenden Faserstränge weisen regelmäßig abgerissene Filamente (Faserspleiß) auf, die durch die Bürsten abgestreift werden können.

Gemäß einer vorteilhaften Weiterbildung weist die Imprägniereinheit einen Mischraum auf, in dem mindestens eine, vorzugsweise zwei oder drei Umlenkstellen zur Umlenkung des Gesamtfaserstranges angeordnet sind. Durch diese Umlenkrollen wird der Faserstrang seitlichen Kräften ausgesetzt, so dass sich die Filamente zueinander verschieben und der Faserstrang besser mit dem umgebenden Harz durchsetzt wird.

Vorzugsweise sind diese Umlenkstellen als auf Stiften gleitend gelagerte Umlenkhülsen ausgebildet. Dadurch können diese nach dem Öffnen des Mischraums zur Verbesserung des Reinigungsvorgangs an den Umlenkstellen entnommen werden.

Gemäß einer vorteilhaften Weiterbildung umfasst der Wickelkopf drei Vorratsspulen für drei Faserstränge und drei erste Umlenkspulen, die vorzugsweise neben- bzw.

Gemäß einer vorteilhaften Ausbildung der Erfindung ist der Wickelträger ortsfest angeordnet ist und der zu bewickelnde Wickelträger an einem Gelenkarmroboter befestigt.

Die der Erfindung zugrunde liegende Aufgabe wird ferner gelöst durch ein Verfahren zur Fertigung von faserverstärkten Bauteilen durch Umwicklung eines Wickelträgers mittels eines harzgetränkten Faserstranges, der von einer Wickelvorrichtung aufgebracht wird, welches dadurch gekennzeichnet ist, dass mittels eines Wickelkopfes mindestens zwei Faserstränge zu einem Gesamtfaserstrang zusammengeführt und dieser durch eine Imprägniereinheit zur Beimengung von Harz geleitet und von dieser zum Wickelträger zu dessen Umwicklung geleitet wird.

übereinander mit zueinander parallelen Drehachsen angeordnet sind.

Gemäß einer vorteilhaften Ausbildung ist mindestens eine Vorratsspule mit einer Kohlefaser bestückt. Diese Faserart zeichnet sich durch eine hohe Reißfestigkeit aus.

Gemäß einer vorteilhaften Ausbildung ist mindestens eine Vorratsspule mit einem Aktuatorgarn bestückt. Dadurch können formveränderbare Strukturen wie beispielsweise geometrisch-verstellbare Flügelprofile wickeltechnisch umgesetzt werden, die je nach Anströmbedingung ihre Gestalt vorteilhaft verändern können. Die Aktuatorgarne können dabei beispielsweise durch das Anlegen einer Spannung angesprochen werden.

Gemäß einer vorteilhaften Ausbildung ist mindestens eine Vorratsspule mit einem Sensorgarn bestückt. Dadurch können sog. Zustandsüberwachungssysteme ("System-Health-Monitoring oder SHM-Systeme") in Strukturen integriert werden, die eine Überwachung des Belastungszustandes des Bauteil während des Betriebs ermöglichen.

Gemäß einer vorteilhaften Ausbildung ist mindestens eine Vorratsspule mit einer Aramidfaser bestückt. Diese Faserart zeichnet sich durch eine hohe Stoßfestigkeit aus.

Weitere Vorteile, Merkmale und Einzelheiten ergeben sich aus der nachfolgenden Beschreibung, in der unter Bezug auf die Zeichnungen ein Ausführungsbeispiel im Einzelnen beschrieben ist. Gleiche, ähnliche und/oder funktionsgleiche Teile sind mit gleichen Bezugszeichen versehen.

Es zeigt:
- Figur 1: eine schematische Seitenansicht einer erfindungsgemäßen Wickelvorrichtung;
- Figur 2: eine perspektivische Ansicht einer Impregniereinheit im geöffneten Zustand.

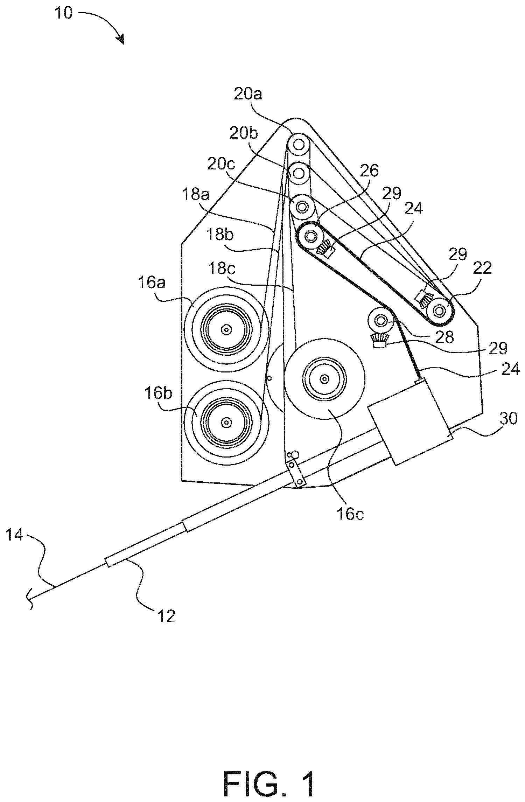

Figur 1 zeigt einen Wickelkopf 10, der vorzugsweise an einem nicht gezeigten Gelenkarmroboter angebracht wird, um dreidimensionale Bewegungen auszuführen, mittels der ein aus einem Faserablagerohr 12 austretender mit Harz versetzter Wickelfaserstrang 14 einen nicht dargestellten Wickelträger zur Erzeugung eines faserverstärkten Bauteils umwickelt. Die Gesamtanlage ist vorzugsweise aufgebaut wie in der DE 10 2017 005 754 A1 offenbart. Es ist alternativ auch möglich, den Wickelkopf 10 fest zu lassen und den Wickelträger mittels eines Gelenkarmroboters zu bewegen, da es nur auf die Relativbewegungen zwischen dem Wickelkopf 10 und dem Wickelträger ankommt. Gemäß noch einer Alternative ist es möglich, sowohl den Wickelkopf 10 als auch den Wickelträger mittels geeigneten Vorrichtungen mit mehreren translatorischen und rotatorischen Freiheitsgraden gegeneinander bewegbar zu gestalten.

Der dargestellte Wickelkopf 10 umfasst drei Faservorratsspulen 16a, 16b, 16c, auf denen jeweils Faserstränge 18a, 18b, 18c aufgewickelt sind, die aus vielen tausenden Filamenten aus gleichartigen oder verschiedenen Materialien bestehen können. Vorzugsweise aber nicht zwingend besteht ein Faserstrang aus Kohlenstoff, ein anderer kann aus einer Aramidfaser oder ebenfalls aus Kohlenstoff oder aus einem Aktuatorgarn oder einem Sensorgarn bestehen. In anderen, nicht gezeigten Ausführungen, können anstelle von drei Faservorratsspulen 16a, 16b, 16c nur zwei oder vier oder mehr solche Vorratsspulen vorgesehen sein.

Der Wickelkopf 10 umfasst ferner drei Umlenkrollen 20a, 20b, 20c, die von den drei Fasersträngen 18a, 18b, 18c beaufschlagt werden. Die drei Faserstränge 18a, 18b, 18c beaufschlagen anschließend eine Bündelungsrolle 22, an der diese zusammengeführt und zu einem Gesamtfaserstrang 24 gebündelt werden. Der Gesamtfaserstrang 24 läuft anschließend zu einer von der Bündelungsrolle 22 beabstandeten Aufspreizrolle 26 und von dort zu einer optionalen Einführungsrolle 28 und von dort in eine Impregniereinheit 30, wo dieser mit einem aushärtbaren Harz versetzt bzw. impregniert wird. Von der Impregniereinheit 30 tritt der mit Harz versetzte Wickelfaserstrang 14 am Ende des Faserablagerohrs 12 aus.

Zwischen der Bündelungsrolle 22 und der Aufspreizrolle 26 einerseits und der Aufspreizrolle 26 und der Einführungsrolle 28 sind zwei Aufspreizbereiche für den Gesamtfaserstrang 24 definiert, in denen der Gesamtfaserstrang 24 aufgespreizt wird, um eine bessere Durchdringung mit dem Harz in der Impregniereinheit 30 zu erreichen.

An der Bündelungsrolle 22, der Aufspreizrolle 26 und der Einführungsrolle 28 sind jeweils Reinigungsbürsten 29 angeordnet, welche diese Rollen im Betrieb reinigen, indem gerissene Filamente abgestreift werden.

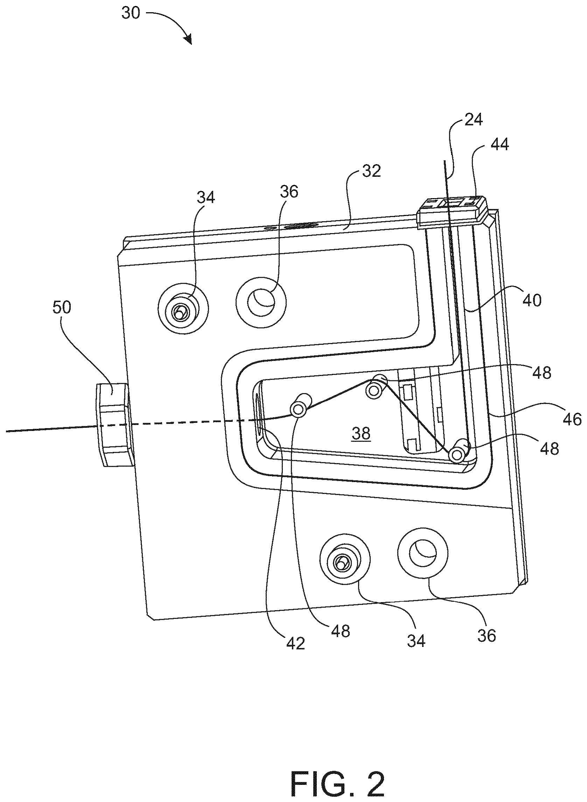

In Figur 2 ist die Impregniereinheit 30 im geöffneten Zustand dargestellt, die aus zwei Halbschalen besteht, von denen nur die am Wickelkopf 10 befestigte Unterschale 32 gezeigt ist. Die beiden Halbschalen weisen Zentrierungselemente 34 und Fixierbohrungen 36 für nicht dargestellte Fixierschrauben auf. Die Impregniereinheit 30 weist eine Mischkammer 38 auf, die einen Einlasskanal 40 und einen Auslasskanal 42 aufweist. Über nicht dargestellte Einrichtungen wird aushärtbares Harz in die Impregnierkammer 30 gedrückt. Das Ende des Einlasskanals 40 ist mit einer Dichtung 44 versehen, die vom Gesamtfaserstrang 24 passierbar ist aber den Austritt von Harz verhindert. Die Mischkammer 38 ist von einem Dichtband 46 umschlossen, das einen Austritt von Harz zwischen die beiden Halbschalen verhindert. In der Mischkammer 38 sind drei Umlenkrollen 48 derart versetzt zueinander angeordnet, dass der Gesamtfaserstrang 24 zick-zack-artig durch die Mischkammer 38 geführt wird, um eine möglichst umfassende Durchdringung mit Harz zu erreichen. Die Umlenkrollen 48 sind vorzugsweise als Hülsen aufgebaut, die auf Stiften gehalten und geführt sind. So kann eine Reinigung der Umlenkrollen 48 durch Entnahme der Hülsen im demontierten Zustand der Impregniervorrichtung 30 erfolgen. Im Auslasskanal 42 ist eine nicht näher dargestellte Impregnierdüse eingeschraubt, von der nur der Schraubansatz 50 zu sehen ist.

Obwohl die Erfindung im Detail durch ein bevorzugtes Ausführungsbeispiel näher illustriert und erläutert wurde, so ist die Erfindung nicht durch die offenbarten Beispiele eingeschränkt und andere Variationen können vom Fachmann hieraus abgeleitet werden, ohne den in den Ansprüchen definierten Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

## Patentansprüche

1. Wickelkopf für eine Wickelvorrichtung zur Fertigung von faserverstärkten Bauteilen durch Umwicklung eines Wickelträgers mittels eines harzgetränkten Faserstranges (24), wobei der Wickelkopf (10) mindestens zwei Vorratsspulen (16a, 16b, 16c) zur Aufnahme von der gleichen Anzahl an Fasersträngen (18a, 18b, 18c) und eine Imprägniereinheit (30) umfasst, durch welche den Fasersträngen (18a, 18b, 18c) für die Imprägnierung flüssiges Harz führbar ist,
wobei jeder Vorratsspule (16a, 16b, 16c) eine Umlenkrolle (20a, 20b, 20c) zugeordnet ist, und beabstandet hinter den Umlenkrollen (20a, 20b, 20c) eine Bündelungsrolle (22) angeordnet ist, an der die Faserstränge (18a, 18b, 18c) vor der Imprägniereinheit (30) in einen Gesamtfaserstrang (24) zusammenführbar sind und beabstandet hinter der Bündelungsrolle (22) eine Aufspreizrolle (26) zur Ausbildung von zwei Faseraufspreizstrecken angeordnet ist.

2. Wickelkopf nach Anspruch 1, **dadurch gekennzeichnet, dass** an der Bündelungsrolle (22) und/oder der Aufspreizrolle (24) jeweils Reinigungsbürsten (29) angeordnet sind.

3. Wickelkopf nach einem der vorherigen Ansprüche, **dadurch gekennzeichnet, dass** die Imprägniereinheit (30) einen Mischraum (38) aufweist, in dem mindestens eine, vorzugsweise zwei oder drei Umlenkrollen (48) zur Umlenkung des Gesamtfaserstranges (24) angeordnet sind.

4. Wickelkopf nach Anspruch 3, **dadurch gekennzeichnet, dass** die Umlenkrollen (48) als auf Stiften gleitend gelagerte Umlenkhülsen ausgebildet sind.

5. Wickelkopf nach einem der vorherigen Ansprüche, **dadurch gekennzeichnet, dass** diese drei Vorratsspulen (16a, 16b, 16c) für drei Faserstränge (18a, 18b, 18c) und drei erste Umlenkspulen (20a, 20b, 20c) umfasst.

6. Wickelkopf nach einem der vorherigen Ansprüche, **dadurch gekennzeichnet, dass** dieser ortsfest angeordnet ist und der zu bewickelnde Wickelträger an einem Gelenkarmroboter befestigt ist.

7. Verfahren zur Fertigung von faserverstärkten Bauteilen durch Umwicklung eines Wickelträgers mit einem Wickelkopf nach einem der vorhergehenden Ansprüche mittels eines harzgetränkten Faserstranges (24), der von dem Wickelkopf (10) aufgebracht wird,
**dadurch gekennzeichnet, dass** mittels des Wickelkopfes (10) mindestens zwei Faserstränge (18a, 18b, 18c) zu einem Gesamtfaserstrang (24) zusammengeführt und dieser über eine Bündelungsrolle (22) und eine dahinter angeordnete Aufspreizrolle (26) unter Ausbildung von zwei Faseraufspreizstrecken durch eine Imprägniereinheit (30) zur Beimengung von Harz geleitet und von dieser zum Wickelträger geleitet wird.

8. Verfahren nach Anspruch 7, **dadurch gekennzeichnet, dass** mindestens eine der Vorratsspulen (16a, 16b, 16c) mit einer Kohlefaser und/oder mit einer Aramidfaser bestückt wird.

9. Verfahren nach einem der Ansprüche 7 oder 8, **dadurch gekennzeichnet, dass** mindestens eine der Vorratsspulen (16a, 16b, 16c) mit einem Aktuatorgarn oder einem Sensorgarn bestückt wird.

## Claims

1. Winding head for a winding device for producing fiber-reinforced components by winding a resin-impregnated fiber strand (24) around a winding support, wherein the winding head (10) comprises at least two supply spools (16a, 16b, 16c) for receiving the same number of fiber strands (18a, 18b, 18c) and an impregnation unit (30) through which the fiber strands (18a, 18b, 18c) can be guided for the impregnation with liquid resin,
wherein each supply reel (16a, 16b, 16c) is assigned a deflection roller (20a, 20b, 20c), and a bundling roller (22) is arranged at a distance behind the deflection rollers (20a, 20b, 20c), on which bundling roller the fiber strands (18a, 18b, 18c) can be combined to form an overall fiber strand (24) ahead of the impregnation unit (30), and a spreading roller (26) for forming two fiber spreading paths is arranged at a distance behind the bundling roller (22).

2. Winding head according to claim 1, **characterized in that** cleaning brushes (29) are arranged on the bundling roller (22) and/or the spreading roller (24).

3. Winding head according to either of the preceding claims,
**characterized in that** the impregnation unit (30) has a mixing chamber (38) in which at least one, preferably two or three, deflection rollers (48) are arranged for deflecting the overall fiber strand (24).

4. Winding head according to claim 3, **characterized in that** the deflection rollers (48) are designed as deflecting sleeves slidingly mounted on pins.

5. Winding head according to any of the preceding claims,
**characterized in that** said winding head comprises three supply spools (16a, 16b, 16c) for three fiber strands (18a, 18b, 18c) and three first deflecting spools (20a, 20b, 20c).

6. Winding head according to any of the preceding claims,
**characterized in that** said winding head is arranged in a stationary manner, and the winding support to be wound around is fastened to an articulated arm robot.

7. Method for producing fiber-reinforced components by winding a resin-impregnated fiber strand (24) around a winding support with a winding head according to any of the preceding claims, which fiber strand is applied by the winding head (10), **characterized in that,** by means of the winding head (10), at least two fiber strands (18a, 18b, 18c) are combined to form an overall fiber strand (24) and said overall fiber strand is guided, for the addition of resin, through an impregnation unit (30), via a bundling roller (22) and a spreading roller (26), arranged behind the bundling roller to form two fiber spreading paths, and is guided from said impregnation unit to the winding support.

8. Method according to claim 7, **characterized in that** at least one of the supply spools (16a, 16b, 16c) is equipped with a carbon fiber and/or an aramid fiber.

9. Method according to either claim 7 or 8, **characterized in that** at least one of the supply spools (16a, 16b, 16c) is equipped with an actuator yarn or a sensor yarn.

## Revendications

1. Tête de bobine pour un dispositif de bobinage permettant la fabrication de composants renforcés par des fibres par bobinage d'un support pour bobine au moyen d'un écheveau de fibres (24) imprégné de résine, dans laquelle la tête de bobine (10) comprend au moins deux bobines de réserve (16a, 16b, 16c) permettant la réception du même nombre d'écheveaux de fibres (18a, 18b, 18c) et une unité d'imprégnation (30) à travers laquelle de la résine liquide peut être guidée vers les écheveaux de fibres (18a, 18b, 18c) pour l'imprégnation,
dans laquelle un rouleau de renvoi (20a, 20b, 20c) est associé à chaque bobine de réserve (16a, 16b, 16c), et un rouleau de mise en faisceau (22) est disposé à une certaine distance derrière les rouleaux de renvoi (20a, 20b, 20c), sur lequel les écheveaux de fibres (18a, 18b, 18c) peuvent être réunis en un écheveau de fibres total (24) avant l'unité d'imprégnation (30), et un rouleau d'écartement (26) est disposé à une certaine distance derrière le rouleau de mise en faisceau (22) pour la formation de deux sections d'écartement de fibres.

2. Tête de bobine selon la revendication 1, **caractérisée en ce que** des brosses de nettoyage (29) sont respectivement disposées sur le rouleau de mise en faisceau (22) et/ou sur le rouleau d'écartement (24).

3. Tête de bobine selon l'une des revendications précédentes,
**caractérisée en ce que** l'unité d'imprégnation (30) présente un espace de mélange (38) dans lequel sont disposés au moins un, de préférence deux ou trois rouleaux de renvoi (48) permettant le renvoi de l'écheveau de fibres total (24).

4. Tête de bobine selon la revendication 3, **caractérisée en ce que** les rouleaux de renvoi (48) sont réalisés sous forme de manchons de renvoi montés coulissants sur des goupilles.

5. Tête de bobinage selon l'une des revendications précédentes,
**caractérisée en ce que** ladite tête de bobinage comprend trois bobines de réserve (16a, 16b, 16c) pour trois écheveaux de fibres (18a, 18b, 18c) et trois premières bobines de renvoi (20a, 20b, 20c).

6. Tête de bobinage selon l'une des revendications précédentes,
**caractérisée en ce que** ladite tête de bobinage est disposée de manière fixe et le support pour bobine à embobiner est fixé à un robot à bras articulé.

7. Procédé de fabrication de composants renforcés par des fibres par bobinage d'un support pour bobine comportant une tête de bobine selon l'une des revendications précédentes au moyen d'un écheveau de fibres (24) imprégné de résine, lequel est appliqué par la tête de bobine (10), **caractérisé en ce que,** au moyen de la tête de bobine (10), au moins deux écheveaux de fibres (18a, 18b, 18c) sont réunis en un écheveau de fibres total (24) et ledit écheveau de fibres total est guidé à travers une unité d'imprégnation (30) pour l'ajout de résine par l'intermédiaire d'un rouleau de mise en faisceau (22) et d'un rouleau d'écartement (26) disposé derrière celui-ci, en formant deux sections d'écartement de fibres, et est guidé par l'unité d'imprégnation vers le support pour bobine.

8. Procédé selon la revendication 7, **caractérisé en ce qu'**au moins une des bobines de réserve (16a, 16b, 16c) est équipée d'une fibre de carbone et/ou d'une fibre d'aramide.

9. Procédé selon l'une des revendications 7 ou 8, **caractérisé en ce qu'**au moins une des bobines de réserve (16a, 16b, 16c) est équipée d'un fil pour actionneur ou d'un fil pour capteur.
